# EUROPEAN PATENT APPLICATION

(11) **EP 2 874 320 A1**
(43) Date of publication of application: **20.05.2015**
(21) Application number: 12878010.3
(22) Date of filing: 25.12.2012
(51) Int. Cl.: H04B 1/40

(54) **OPTICAL WIRELESS TRANSMISSION DEVICE, OPTICAL WIRELESS TRANSMISSION METHOD, AND OPTICAL WIRELESS TRANSMISSION SYSTEM**

(30) Priority: 30.05.2012 JP 2012122584
(71) Applicant: NEC Corporation, Tokyo 108-8001 (JP)
(72) Inventor: ITOU Takuya, Tokyo 108-8001 (JP)
(74) Representative: Glawe, Delfs, Moll
(86) International application number: PCT/JP2012/008290
(87) International publication number: WO 2013/179363

(57) **Abstract**

An object is to provide an optical/wireless transmission apparatus capable of communicating with counterpart apparatuses by selectively using optical transmission and wireless transmission according to the counterpart apparatuses to communicate with, and selecting an arbitrary path and an arbitrary frequency from a plurality of frequencies, and, furthermore, multiplexing signals as may be necessary. An optical/wireless transmission apparatus (1) converts a plurality of input baseband signals into optical or electrical signals as may be necessary, modulating respective signals at different frequencies, multiplexing a predetermined number of optical modulated signals and a predetermined number of wireless modulated signals, and transmitting an optical multiplexed signal via a predetermined optical fiber (3 to 5) or a wireless multiplexed signal via a directional antenna (18) to a counterpart apparatus.

## Description

### [Technical Field]

The present invention relates to an optical/wireless transmission apparatus, an optical/wireless transmission method and an optical/wireless transmission system, and, in particular, relates to an optical/wireless transmission apparatus, an optical/wireless transmission method and an optical/wireless transmission system that, in response to a signal from a control system, determines in which direction and at which frequency to transmit an input signal.

### Background Art

As for the transmission systems related to the present invention, systems are separated for optical transmission and for wireless transmission. In optical transmission systems, an optical switching apparatus equipped with a wavelength selection function that selects an arbitrary wavelength and enables transmission with an arbitrary path exists, but a function that selects a wireless transmission path as a choice of path does not exist. Furthermore, also with regard to wireless transmission systems, there does not exist a system that performs communication by freely selecting an arbitrary path and an arbitrary frequency from a plurality of frequencies, and transmission path operation in a fixed manner has been performed.

On the other hand, as an example of a transmission system related to the present invention, a communication path switching system capable of changing the transmission path from an optical communication path to a wireless communication path is disclosed (refer to, for example, Patent Literature 1).

The system described in Patent Literature 1 is configured so as to be capable of securing a communication path even when a failure in communication occurs on a wire communication path that connects a network and a communication device that a user uses to each other.

Specifically, Patent Literature 1 describes a communication system in which a subscriber line exchange and a communication path switching apparatus are connected to each other by a plurality of bundled optical fiber cables, and the communication path switching apparatus and each communication apparatus are separately connected to each other by a single-core optical fiber.

As for the system described in Patent Literature 1, in the communication between the subscriber line exchange and each communication apparatus, the communication between the communication path switching apparatus and the individual communication apparatuses is usually performed by using the respective single-core fibers. Then, when a failure occurs between this communication path switching apparatus and the communication apparatuses, the subscriber line exchange communicates with the communication apparatuses wirelessly via a wireless communication unit in the communication path switching apparatus.

### [Citation List]

### [Patent Literature]

[PTL 1] Japanese Patent Application Publication No. 2003-298605

### [Summary of Invention]

### [Technical Problem]

However, since systems are separated for optical transmission and for wireless transmission in the relevant inventions, which leads to a problem of not being able to communicate with counterpart apparatuses by selectively using optical transmission and wireless transmission according to the counterpart apparatuses to communicate with, and selecting an arbitrary path and an arbitrary frequency from a plurality of frequencies, and, furthermore, multiplexing signals as may be necessary.

On the other hand, Patent Literature 1 merely discloses a technique that switches from the optical transmission to the wireless transmission when a failure occurs, but does not disclose at all a technique that selectively uses the optical transmission and the wireless transmission according to a counterpart apparatus. Therefore, the invention described in Patent Literature 1 cannot solve the problem to be solved by the present invention.

Accordingly, an object of the present invention is to provide an optical/wireless transmission apparatus, an optical/wireless transmission method and an optical/wireless transmission system that are capable of communicating with a counterpart apparatus by selectively using optical transmission and wireless transmission according to the counterpart apparatus to communicate with, and selecting an arbitrary path and an arbitrary frequency from a plurality of frequencies, and, furthermore, multiplexing signals as may be necessary.

### [Solution to Problem]

In order to solve the aforementioned problem, the optical/wireless transmission apparatus according to the present invention includes converting a plurality of input baseband signals into optical or electrical signals as may be necessary, modulating respective signals at different frequencies, multiplexing a predetermined number of optical modulated signals and a predetermined number of wireless modulated signals, and transmitting an optical multiplexed signal via a predetermined optical fiber or a wireless multiplexed signal via a directional antenna to a counterpart apparatus.

Furthermore, the optical/wireless transmission method according to the present invention includes an optical/wireless transmission step of converting a plurality of input baseband signals into optical or electrical signals as may be necessary, modulating respective signals at different frequencies, multiplexing a predetermined number of optical modulated signals and a predetermined number of wireless modulated signals, and transmitting an optical multiplexed signal via a predetermined optical fiber or a wireless multiplexed signal via a directional antenna to a counterpart apparatus.

Furthermore, the optical/wireless transmission system according to the present invention includes: optical/wireless transmission apparatuses; a control system that instructs the optical/wireless transmission apparatuses in which direction and at which frequency to transmit an input baseband signal; and an optical branching apparatus that demultiplexes an optical multiplexed signal output from one of the optical/wireless transmission apparatuses to output to the other of a plurality of other optical/wireless transmission apparatuses.

Furthermore, the program according to the present invention is characterized by being a program for causing a control circuit of an optical/wireless transmission apparatus to execute an optical/wireless transmission step of converting a plurality of input baseband signals into optical or electrical signals as may be necessary, modulating respective signals at different frequencies, multiplexing a predetermined number of optical modulated signals and a predetermined number of wireless modulated signals, and transmitting an optical multiplexed signal via a predetermined optical fiber or a wireless multiplexed signal via a directional antenna to a counterpart apparatus.

### [Advantageous Effects of Invention]

An exemplary effect according to the invention is that it becomes possible to communicate with a counterpart apparatus by selectively using the optical transmission and the wireless transmission according to the counterpart apparatuses to communicate with, and selecting an arbitrary path and an arbitrary frequency from a plurality of frequencies, and, furthermore, multiplexing signals as may be necessary. As a result, an optimum frequency, path and medium (optical or radio) can be selected according to the status of the network, making it possible to make full advantage of effectively utilizing the limited transmission resources (optical transmission paths and spatial frequencies).

### [Brief Description of Drawings]

Fig. 1 is a configuration diagram of an example of an optical/wireless transmission system in an exemplary embodiment of the present invention;
Fig. 2 is a configuration diagram of an example of an optical/wireless transmission apparatus in an exemplary embodiment of the present invention; and
Fig. 3 is a flowchart illustrating an example of an optical/wireless transmission method for an optical/wireless transmission apparatus in an exemplary embodiment of the present invention.

### [Description of Embodiments]

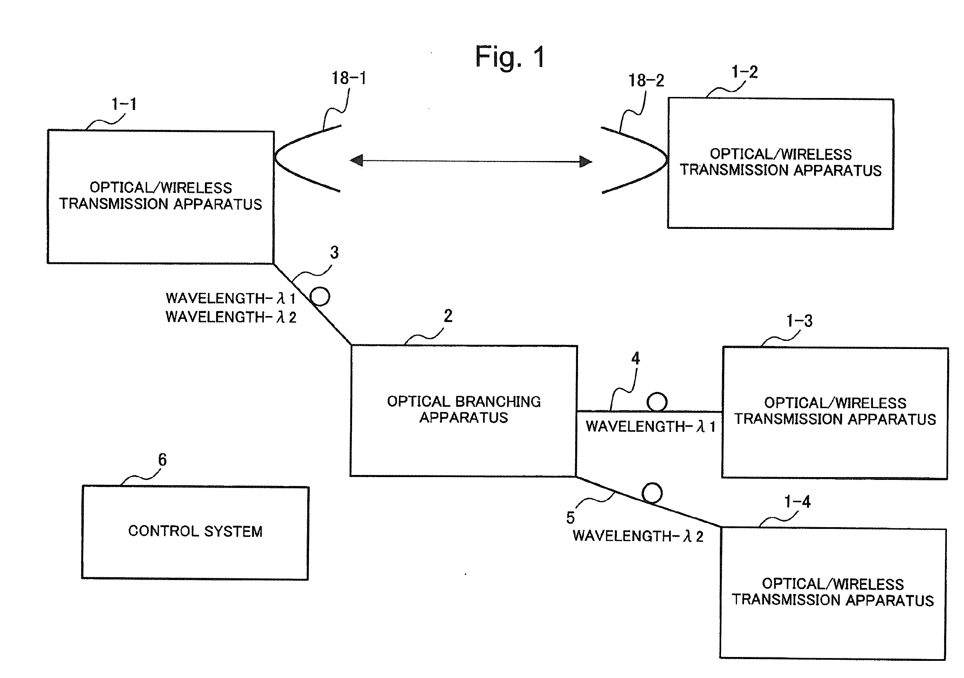

Hereinafter, exemplary embodiments of the present invention will be described with reference to the accompanying drawings. Firstly, an example of an optical/wireless transmission system in an exemplary embodiment of the present invention will be described. Fig. 1 is a configuration diagram of an example of the optical/wireless transmission system in an exemplary embodiment of the present invention.

Referring to the drawing, the optical/wireless transmission system in the exemplary embodiment of the present invention includes a plurality of optical/wireless transmission apparatuses 1 (1-1 to 1-4 as an example), an optical branching apparatus 2, a plurality of optical fibers 3 to 5, a control system 6, and a plurality of directional antennas 18 (18-1 to 18-2 as an example).

The optical/wireless transmission apparatus 1-1 is connected to the optical branching apparatus 2 via the optical fiber 3. In addition, the optical branching apparatus 2 is connected to the optical/wireless transmission apparatus 1-3 via the optical fiber 4, and to the optical/wireless transmission apparatus 1-4 via the optical fiber 5. The optical/wireless transmission apparatus 1-1 is equipped with the directional antenna 18-1, the optical/wireless transmission apparatus 1-2 is also equipped with the directional antenna 18-2, and wireless transmission is performed between the optical/wireless transmission apparatus 1-1 and the optical/wireless transmission apparatus 1-2.

Note that in the drawing, for the sake of convenience, only the optical/wireless transmission apparatuses 1-1 and 1-2 are equipped with the directional antennas 18-1 and 18-2, respectively. However, in reality, all the optical/wireless transmission apparatuses 1 are equipped with directional antennas 18. Furthermore, although the drawing illustrates, as an example, a configuration in which the optical/wireless transmission apparatus 1-1 and the optical/wireless transmission apparatus 1-2 are not connected to each other by an optical fiber, it is also possible to connect the optical/wireless transmission apparatus 1-1 and the optical/wireless transmission apparatus 1-2 to each other by an optical fiber.

The control system 6 instructs the optical/wireless transmission apparatuses 1-1 to 1-4 in which direction and at which frequency to transmit an input baseband signal (regardless of whether the signal is an optical signal or an electrical signal).

In other words, the optical/wireless transmission system illustrated in Fig. 1, for example, performs wireless transmission between the optical/wireless transmission apparatus 1-1 and the optical/wireless transmission apparatus 1-2, and performs optical multiplex transmission at wavelengths λ1 and λ2 between the optical/wireless transmission apparatus 1-1 and the optical branching apparatus 2 via the optical fiber 3. The optical branching apparatus 2 demultiplexes the optical multiplexed signals having the wavelengths λ1 and λ2, and optically transmits an optical signal having the wavelength λ1 to the optical/wireless transmission apparatus 1-3 via the optical fiber 4, and optically transmits an optical signal having the wavelength λ2 to the optical/wireless transmission apparatus 1-4 via the optical fiber 5.

The transmission routes of signals illustrated in Fig. 1 are an example of routes that the control system 6 designates to each of the optical/wireless transmission apparatuses 1-1 to 1-4, and are not limited to this example. The control system 6 is capable of setting transmission routes so as to cause arbitrary optical/wireless transmission apparatuses 1 to communicate with each other, and is capable of selecting an optimum frequency, path and medium (optical or radio) according to the status of the network.

A control signal for matching the communication frequency of a host optical/wireless transmission apparatus 1 and the communication frequency of a counterpart optical/wireless transmission apparatus 1 with each other is added beforehand to communication data transmitted/received between the two apparatuses. The control signal is added to the communication data on the basis of an instruction from the control system 6. Furthermore, the control system 6 sets an optimum transmission path and selects an optimum frequency.

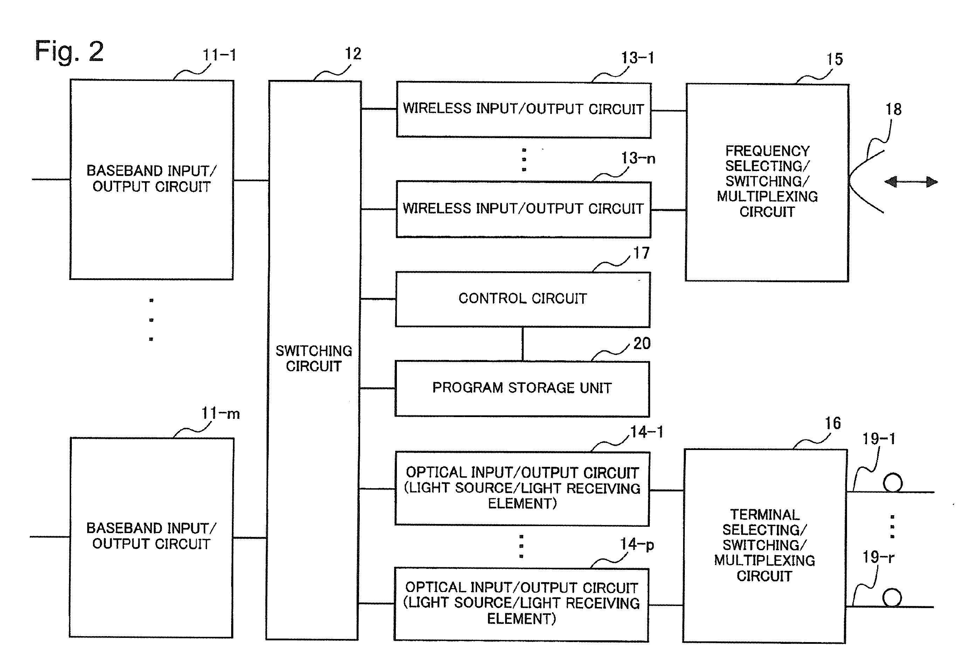

Next, an example of the configuration of the optical/wireless transmission apparatus 1 will be described. Note that the configurations of the plurality of optical/wireless transmission apparatuses 1-1 to 1-4 are substantially the same. Fig. 2 is a configuration diagram of an example of the optical/wireless transmission apparatus in accordance with the present invention.

Referring to the drawing, the optical/wireless transmission apparatus in an exemplary embodiment of the present invention includes a plurality of baseband signal input/output circuits 11-1 to 11-m (m is a positive integer), a switching circuit 12, a plurality of wireless input/output circuits 13-1 to 13-n (n is a positive integer), a plurality of optical input/output circuits 14-1 to 14-p (p is a positive integer), a frequency selecting/switching/multiplexing circuit 15, a terminal selecting/switching/multiplexing circuit 16, a control circuit 17, a directional antenna 18, optical fibers 19-1 to 19-r (r is a positive integer), and a program storage unit 20.

The baseband signal input/output circuits 11-1 to 11-m input/output input baseband signals, after converting the input baseband signals into optical or electrical signals as may be necessary. In other words, the input baseband signals are optical or electrical signals, and the baseband signal input/output circuits 11-1 to 11-m are equipped with an optical/electrical conversion function of converting an input optical baseband signal into an electrical signal, or an input electrical baseband signal into an optical signal.

The switching circuit 12 outputs the baseband signals output from the baseband signal input/output circuits 11-1 to 11-m, to a predetermined output destination, in other words, to any of the wireless input/output circuits 13-1 to 13-n and the optical input/output circuits 14-1 to 14-p, after converting the baseband signals into optical or electrical signals as may be necessary. Furthermore, the switching circuit 12 is also equipped with a function of outputting the baseband signals output from the wireless input/output circuits 13-1 to 13-n and the optical input/output circuits 14-1 to 14-p, to the baseband signal input/output circuits 11-1 to 11-m, after converting the baseband signals into optical or electrical signals as may be necessary.

The wireless input/output circuits 13-1 to 13-n modulate respective electrical baseband signals output from the switching circuit 12 at different frequencies, or demodulate wireless modulated signals output from the frequency selecting/switching/multiplexing circuit 15.

The optical input/output circuits 14-1 to 14-p modulate respective optical baseband signals output from the switching circuit 12 at different frequencies, or demodulate optical modulated signals output from the terminal selecting/switching/multiplexing circuit 16. Note that each of the optical input/output circuits 14-1 to 14-p includes a light source and a light receiving element that are not illustrated in the drawings. Therefore, each of the optical input/output circuits 14-1 to 14-p is also equipped with an electrical/optical conversion function.

The frequency selecting/switching/multiplexing circuit 15 multiplexes the wireless modulated signals output from a predetermined number of circuits of the plurality of wireless input/output circuits 13-1 to 13-n, and transmits multiplexed signals to a counterpart apparatus via the directional antenna 18. Furthermore, the frequency selecting/switching/multiplexing circuit 15 is equipped with a function of outputting signals obtained by demultiplexing a wireless multiplexed signal received via the directional antenna 18 to predetermined wireless input/output circuits 13.

The terminal selecting/switching/multiplexing circuit 16 multiplexes the optical modulated signals output from a predetermined number of circuits of the plurality of optical input/output circuits 14-1 to 14-p, and transmits multiplexed signals to a counterpart apparatus via a predetermined optical fiber 19. Furthermore, the terminal selecting/switching/multiplexing circuit 16 is equipped with a function of demultiplexing an optical multiplexed signal received via any of the optical fibers 19-1 to 19-r, and outputting demultiplexed signals to predetermined optical input/output circuits 14.

The control circuit 17 carries out the frequency selection and the modulation/demodulation by controlling the wireless input/output circuits 13-1 to 13-n and the optical input/output circuits 14-1 to 14-p, and causes the optical signals and the wireless signals to be transmitted to an arbitrary path by controlling the baseband signal input/output circuits 11, the switching circuit 12, the frequency selecting/switching/multiplexing circuit 15 and the terminal selecting/switching/multiplexing circuit 16.

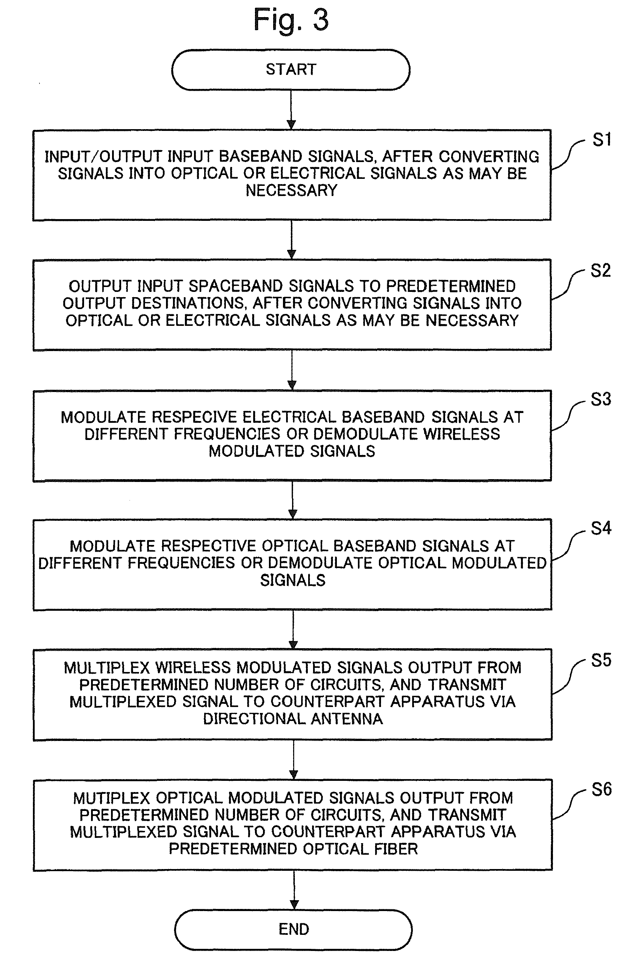

Next, an example of an optical/wireless transmission method for an optical/wireless transmission apparatus in an exemplary embodiment of the present invention will be described with reference to a flowchart. Fig. 3 is a flowchart illustrating the example of the optical/wireless transmission method for the optical/wireless transmission apparatus in the exemplary embodiment of the present invention.

Note that the operations below are executed by the control circuit 17 controlling the baseband signal input/output circuits 11, the switching circuit 12, the frequency selecting/switching/multiplexing circuit 15 and the terminal selecting/switching/multiplexing circuit 16.

The plurality of baseband signal input/output circuits 11-1 to 11-m input/output input baseband signals, after converting the input baseband signals into optical or electrical signals as may be necessary (step S1).

The switching circuit 12 outputs the baseband signals output by the baseband signal input/output circuits 11, to a predetermined output destination, after converting the baseband signals into optical or electrical signals as may be necessary (step S2).

The plurality of wireless input/output circuits 13 modulate respective electrical baseband signals output from the switching circuit 12, at different frequencies, or demodulate wireless modulated signals (step S3).

The plurality of optical input/output circuits 14 modulate respective optical baseband signals output from the switching circuit 12, at different frequencies, or demodulate optical modulated signals (step S4).

The frequency selecting/switching/multiplexing circuit 15 multiplexes the wireless modulated signals output from a predetermined number of circuits of the plurality of wireless input/output circuits 13, and transmits multiplexed signals to a counterpart apparatus via the directional antenna 18 (step S5).

The terminal selecting/switching/multiplexing circuit 16 multiplexes the optical modulated signals output by a predetermined number of circuits of the plurality of optical input/output circuits 14, and transmits multiplexed signals to a counterpart apparatus via a predetermined optical fiber 19 (step S6).

As described above, according to the optical/wireless transmission apparatus, the optical/wireless transmission method and the optical/wireless transmission system of the present invention, a plurality of transmission means based on wired and wireless manners can be freely selected. Moreover, by freely selecting optical wavelengths and wireless frequencies, limited resources can be effectively utilized. Furthermore, for example, when the number of optical fibers is limited, the optical fiber resource in a limited section can be effectively utilized by multiplexing a plurality of optical signals whose wavelengths are different from each other.

Furthermore, also in wireless transmission, the resources in a wireless section can be effectively utilized by transmitting electrical signals of a plurality of wavelengths via a common antenna after multiplexing the electrical signals. Still further, having the system for selecting an optimum transmission path and an optimum optical wavelength/wireless frequency according to the status of the network enables optimization of optical/wireless transmission resources.

Next, a program of an optical/wireless transmission method for an optical/wireless transmission apparatus of the present invention will be described. As illustrated in Fig.2, the optical/wireless transmission apparatus in the exemplary embodiment of the present invention is equipped with the program storage unit 20. The program storage unit 20 stores a program of the optical/wireless transmission method illustrated in the flowchart of Fig. 3.

The control circuit 17 of the optical/wireless transmission apparatus reads the program from the program storage unit 20, and, according to the program, controls the baseband signal input/output circuits 11, the switching circuit 12, the frequency selecting/switching/multiplexing circuit 15 and the terminal selecting/switching/multiplexing circuit 16. The description of the content of the control will be omitted here as it has already been described. Note that the program stored in the program storage unit 20 includes a design program for detecting the status of the traffic or the status of the network and selecting an optimum frequency, path and medium (optical or radio).

As described above, according to the present invention, the program of the optical/wireless transmission method may be obtained which is capable of communicating with a counterpart apparatus by selectively using the optical transmission and the wireless transmission according to the counterpart apparatus to communicate with, and selecting an arbitrary path and an arbitrary frequency from a plurality of frequencies, and, furthermore, multiplexing signals as may be necessary.

### [Industrial Applicability]

It is possible to apply the present invention to a transmission network that a mobile service provider introduces.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.

Furthermore, as for the above-described program, various types of non-transitory computer readable media (non-transitory computer readable medium) can be used to store the program and supply the program to a computer. The non-transitory computer readable medium includes various types of tangible recording media (tangible storage medium). Examples of the non-transitory computer readable medium include magnetic recording medium (for example, a flexible disk, a magnetic tape, a hard disk drive), magneto-optical recording medium (for example, a magneto-optical disk), CD-ROM (Read Only Memory) CD-R, CD-R/W, semiconductor memory (for example, mask ROM, PROM (Programmable ROM), EPROM (Erasable PROM), flash ROM, RAM (Random Access Memory)). Furthermore, the program may be supplied to a computer by various types of transitory computer readable media (transitory computer readable medium). Examples of the transitory computer readable medium include electrical signals, optical signals, and electromagnetic waves. The transitory computer readable medium can supply the program to a computer via a wire communication path, such as an electric cable and an optical fiber, or a wireless communication path.

This application is based upon and claims the benefit of priority from Japanese patent application No. 2012-122584, filed on May 30, 2012, the disclosure of which is incorporated herein in its entirety by reference.

### [Reference Signs List]

1 Optical/wireless transmission apparatus
2 Optical branching apparatus
3 to 5 Optical fiber
6 Control system
11 Baseband signal input/output circuit
12 Switching circuit
13 Wireless input/output circuit
14 Optical input/output circuit
15 Frequency selecting/switching/multiplexing circuit
16 Terminal selecting/switching/multiplexing circuit
17 Control circuit
18 Directional antenna
19 Optical fiber
20 Program storage unit

## Claims

1. An optical/wireless transmission apparatus converting a plurality of input baseband signals into optical or electrical signals as may be necessary, modulating respective signals at different frequencies, multiplexing a predetermined number of optical modulated signals each other and a predetermined number of wireless modulated signals each other, and transmitting an optical multiplexed signal via a predetermined optical fiber or a wireless multiplexed signal via a directional antenna to a counterpart apparatus.

2. The optical/wireless transmission apparatus according to Claim 1, further demultiplexing and demodulating the optical multiplexed signal and the wireless multiplexed signal sent from the counterpart apparatus, and converting demodulated baseband signals into optical or electrical signals as may be necessary.

3. The optical/wireless transmission apparatus according to Claim 1 or 2, comprising:
a plurality of baseband signal input/output circuits that input/output the input baseband signals, after converting the input baseband signals into optical or electrical signals as may be necessary;
a switching circuit that outputs the baseband signals output from the baseband signal input/output circuits, to a predetermined output destination, after converting the baseband signals into optical or electrical signals as may be necessary;
a plurality of wireless input/output circuits that modulate respective electrical baseband signals output from the switching circuit, at different frequencies, or demodulate wireless modulated signals;
a plurality of optical input/output circuits that modulate respective optical baseband signals output from the switching circuit, at different frequencies, or demodulate optical modulated signals;
a frequency selecting/switching/multiplexing circuit that multiplexes wireless modulated signals output from a predetermined number of circuits of the plurality of wireless input/output circuits, to transmit to the counterpart apparatus via the directional antenna;
a terminal selecting/switching/multiplexing circuit that multiplexes optical modulated signals output from a predetermined number of circuits of the plurality of optical input/output circuits, to transmit to the counterpart apparatus via the predetermined optical fiber; and
a control circuit that carries out frequency selection, and modulation and demodulation by controlling the wireless input/output circuits and the optical input/output circuits, and causes optical signals and wireless signals to be transmitted to an arbitrary path by controlling the baseband signal input/output circuits, the switching circuit, the frequency selecting/switching/multiplexing circuit and the terminal selecting/switching/multiplexing circuit.

4. An optical/wireless transmission method for an optical/wireless transmission apparatus, comprising an optical/wireless transmission step of converting a plurality of input baseband signals into optical or electrical signals as may be necessary, modulating respective signals at different frequencies, multiplexing a predetermined number of optical modulated signals and a predetermined number of wireless modulated signals, and transmitting an optical multiplexed signal via a predetermined optical fiber or a wireless multiplexed signal via a directional antenna to a counterpart apparatus.

5. The optical/wireless transmission method according to Claim 4, further comprising demultiplexing and demodulating the optical multiplexed signal and the wireless multiplexed signal sent from the counterpart apparatus, and converting demodulated baseband signals into optical or electrical signals as may be necessary.

6. The optical/wireless transmission method according to Claim 4 or 5, **characterized by** comprising:
a plurality of baseband signal input/output steps of inputting/outputting an input baseband signal after converting the input baseband signal into an optical or electrical signal as may be necessary;
a switching step of outputting the baseband signals output in the baseband signal input/output steps, to a predetermined output destinations, after converting the baseband signals into optical or electrical signals as may be necessary;
a plurality of wireless input/output steps of modulating electrical baseband signals output in the switching step, at respectively different frequencies, or demodulating wireless modulated signals;
a plurality of optical input/output steps of modulating respective optical baseband signals output in the switching step, at different frequencies, or demodulating optical modulated signals;
a frequency selecting/switching/multiplexing step of multiplexing wireless modulated signals output from a predetermined number of circuits in the plurality of wireless input/output steps, to transmit to the counterpart apparatus via the directional antenna; and
a terminal selecting/switching/multiplexing step of multiplexing optical modulated signals output from a predetermined number of circuits in the plurality of optical input/output steps, to transmit to the counterpart apparatus via the predetermined optical fiber.

7. An optical/wireless transmission system comprising:
optical/wireless transmission apparatuses each according to any one of Claims 1 to 3; a control system that instructs the optical/wireless transmission apparatuses in which direction and at which frequency to transmit an input baseband signal; and an optical branching apparatus that demultiplexes an optical multiplexed signal output from one of the optical/wireless transmission apparatuses to output to the other of a plurality of other optical/wireless transmission apparatuses.

8. A non-transitory computer readable medium storing a program for causing a control circuit of an optical/wireless transmission apparatus to execute
an optical/wireless transmission step of converting a plurality of input baseband signals into optical or electrical signals as may be necessary, modulating respective signals at different frequencies, multiplexing a predetermined number of optical modulated signals and a predetermined number of wireless modulated signals, and transmitting an optical multiplexed signal via a predetermined optical fiber or a wireless multiplexed signal via a directional antenna to a counterpart apparatus.
